# NEUE EUROPÄISCHE PATENTSCHRIFT

(11) **EP 0 720 698 B2**
(45) Veröffentlichungstag und Bekanntmachung des Hinweises auf die Entscheidung über den Einspruch: **27.11.2002**
(45) Hinweis auf die Patenterteilung: 13.05.1998
(21) Anmeldenummer: 94926771.0
(22) Anmeldetag: 09.09.1994
(51) Int. Cl.: F16C 13/00

(54) **DURCHBIEGUNGSEINSTELLWALZE MIT EINER AUS FASERVERSTÄRKTEM KUNSTSTOFFMATERIAL HERGESTELLEN HOHLWALZE**
DEFLECTION ADJUSTMENT ROLLER WITH A HOLLOW ROLLER MADE OF FIBRE-REINFORCED PLASTIC
ROULEAU D'AJUSTAGE PAR FLEXION POURVU D'UN ROULEAU EVIDE EN PLASTIQUE RENFORCE PAR FIBRES

(30) Priorität: 27.09.1993 DE 9314568 U
(43) Veröffentlichungstag der Anmeldung: 10.07.1996
(73) Patentinhaber: Eduard Küsters Maschinenfabrik GmbH & Co. KG, 47805 Krefeld (DE)
(72) Erfinder: HADER, Peter, D-47906 Kempen (DE); KUBIK, Klaus, D-47804 Krefeld (DE)
(74) Vertreter: Palgen, Peter, Dipl.-Phys.
(86) Internationale Anmeldenummer: DE9401037
(87) Internationale Veröffentlichungsnummer: WO95009309

(56) Entgegenhaltungen:
- EP-A- 0 363 887
- WO-A-92/13787
- WO-A-92/19809
- DE-B- 2 522 657
- DE-C- 3 813 598
- DE-C- 3 815 462
- DE-U- 8 406 019
- FR-A- 2 311 133
- GB-A- 1 135 901
- GB-A- 2 057 092
- GB-A- 2 105 497
- US-A- 4 327 467

## Beschreibung

Die Erfindung bezieht sich auf eine Walze der dem Oberbegriff des Anspruchs 1 entsprechenden Art.

Eine solche Walze ist für einen speziellen Anwendungsfall aus der WO 92/13787 bekannt. Die bekannte Walze ist eine durchbiegungssteuerbare Andrückwalze für einen Folienwickler, die eine Hohlwalze aus einem faserverstärkten Kunststoff mit einer öl- und/oder wasserdichten Schutzschicht am Innenumfang und einen Belag aus einem elastomeren Material am Außenumfang aufweist. Einzelheiten der konstruktiven Ausgestaltung sind nicht beschrieben.

Der Erfindung liegt die Aufgabe zugrunde, eine gattungsgemäße Walze so auszugestalten, daß sie eine möglichst weitgehende Anpassung des Liniendruckprofils für die Druckbehandlung von Warenbahnen erlaubt.

Diese Aufgabe wird durch die in Anspruch 1 wiedergegebene Erfindung gelöst. Die Ausbildung der Hohlwalze aus faserverstärktem Kunstharz ermöglicht es, die Hohlwalze in einer durch ihre Achse gehenden Ebene besonders leicht biegsam zu machen, damit die von den Stützelementen innen aufgebrachten Kräfte am Außenumfang der Walze in einem dem Kräfteprofil möglichst nahekommenden Linienkraftprofil "durchschlagen". Üblicherweise bestehen ja die Hohlwalzen von durchbiegungssteuerbaren Walzen aus einem Stahlrohr von 30-100 mm Wandstärke. Dieses Stahlrohr hat eine erhebliche Eigensteifigkeit, die ein auf der Innenseite aufgebrachtes Kräfteprofil weitgehend glättet. Ungeachtet der erwünschten Biegsamkeit der Hohlwalze in der durch ihre Längsachse gehenden Ebene soll ihre Formstabilität in Umfangsrichtung noch so sein, daß ein einwandfreier Lauf der Hohlwalze ohne wesentliche Abweichung von der kreiszylindrischen Querschnittsform gewährleistet ist. Eine biegeschlaffer Schlauch als Hohlwalze kommt also nicht in Betracht. Vielmehr soll die Formsteifigkeit so sein, daß das Material in kräftefreiem Zustand seine Rohrform aufrechterhält und nicht etwa schon unter seinem Gewicht eine nennenswerte Abplattung erfährt.

Die verringerte Biegesteifigkeit in der durch die Achse gehenden Ebene verlangt eine praktisch durchgehende Unterstützung längs des Walzspalts, wenn sich nicht eine wellenförmige Linienkraftverteilung im Walzspalt einstellen soll, bei der zwischen den Unterstützungszonen ein Linienkraftabfall durch entsprechende Durchbiegung der Hohlwalze zu verzeichnen ist. Aus diesem Grunde geht mit der Verringerung der Biegesteifigkeit der Hohlwalze in der durch die Längsachse gehenden Ebene die "dichte Packung" der Stützelemente in Längsrichtung einher, was für sich genommen aus der DE-A- 30 22 491 zu entnehmen ist.

Bei den üblichen durchbiegungssteuerbaren Walzen mit Hohlwalzen aus Stahl relativ großer Wandstärke führt deren schon erwähnte hohe Biegesteifigkeit dazu, daß es keinen Sinn macht, die Vielzahl von Stützelementen (bei größeren Walzen sind bis zu etwa fünfzig solcher Stützelemente in Längsrichtung nebeneinander aufgereiht) sämtlich einzeln anzusteuern. Es reicht (und wird nur so praktiziert), wenn die Stützelemente gruppenweise angesteuert werden, beispielsweise in drei Gruppen oder in fünf Gruppen. Daß überhaupt viele einzelne Stützelemente vorhanden sind, hat bei den durchbiegungssteuerbaren Walzen mit Hohlwalzen aus Stahl weniger mit einer feinen Ausgestaltung der Biegelinie als mit der optimalen Anpassung der Anlage der Stützelemente an die durchgebogene Hohlwalze zu tun: nur deshalb sind innerhalb einer gemeinsam angesteuerten Gruppen einzelne voneinander getrennte Stützelemente vorhanden.

Bei der Erfindung geht es aber gerade um eine besonders feine Ausgestaltung der Linienkraftverteilung. und unter diesem Aspekt umfaßt sie die zusätzlichen Merkmale, daß die Stützelemente in ihrer Längsausdehnung beschränkt und sämtlich unabhängig voneinander ansteuerbar sind. Bei einer aus faserverstärktem. Kunstharz bestehenden Hohlwalze schlägt eine abweichende Beaufschlagung eines einzelnen Stützelementes durchaus schon nach außen durch und ist dementsprechend die Einzelansteuerung sinnvoll.

Die Einzelansteuerung von Stützstempeln ist im Prinzip bekannt gewesen, solange es stempelgestützte durchbiegungssteuerbare Walzen gibt. Nur wurden diese Walzen mit Hohlwalzen aus Stahl realisiert, und dabei ist die Einzelansteuerung nicht sinnvoll und deshalb auch nicht ausgeführt worden. Beispiele für das prinzipielle Bekanntsein der Einzelansteuerung gehen aus der US-A 31 19 324, der DE-A 22 30 139 und der DE-C 36 40 903 hervor.

Aus der DE 38 15 462 C1 geht ein Stützelement für eine hydrostatisch innenabgestützte Walze hervor, welches so gestaltet ist, daß die Berandung der Lagertaschen in Walzenumfangsrichtung an jeder Stelle des Stützelements - in Walzenlängsrichtung gesehen - die gleiche Erstreckung hat. Dadurch ist auch die Wärmeentwicklung in der Flüssigkeitsschicht zwischen der Berandung der Lagertaschen und dem Innenumfang der Hohlwalze über die Längenerstreckung des Stützelements konstant. Damit sich diese erreichte Konstanz auch in der ganzen Walze nutzen läßt, wird empfohlen, daß die einzelnen Stützelemente möglichst dicht aufeinanderfolgen oder die Stützelemente in mehreren in Umfangsrichtung gegeneinander versetzten Reihen angeordnet sind. Die DE 38 15 462 C1 steht also ganz unter dem Aspekt der inneren Wärmeentwicklung zwischen einem metallischen Walzenrohr und einem metallischen Stützelement.

Walzen der erfindungsgemäßen Art haben Außendurchmesser im Bereich von etwa 40 bis 60 cm. Im Innern dieser Walzen ist das die Durchbiegung abfangende Querhaupt untergebracht, dessen Querschnitt zur Bewahrung einer großen Biegesteifigkeit möglichst viel vom Innenquerschnitt der Hohlwalze einnehmen und jedenfalls möglichst wenig geschwächt werden soll. Wenn nun bei einer größeren Walze zwanzig bis fünfzig Stützelemente vorhanden sind und diese erfindungsgemäß alle einzeln ansteuerbar sein und deshalb eine eigene Zuleitung haben sollen, muß in dem zur Verfügung stehenden Querschnitt Platz für zwanzig bis fünfzig Rohrleitungen geschaffen sein. Dies kann zu erheblichen räumlichen Problemen führen.

Die Erfindung erstreckt sich daher auch auf eine angepaßte Ausbildung der einzelnen Stützelemente und ihrer Druckversorgung.

Der zu vergleichende Stand der Technik findet sich in der DE-C 38 13 598. Bei dieser Schrift ist aber die den einzelnen Stützelementen zugeführte Druckflüssigkeit mengengeregelt, d.h. bei allen Drucksituationen strömt über die Ränder der Lagertaschen stets die gleiche Menge Druckflüssigkeit ab. Dies ist bei der DE-C 38 13 598 durch die dort im Vordergrund stehende Beheizung der Walze über die Druckflüssigkeit begründet. Jedem Stützelement wird also unabhängig von der von ihm ausgeübten Kraft eine konstante Menge an beheizter Lagertaschenflüssigkeit zugeführt, so daß die Beheizung an der betreffenden Stelle unabhängig von der Druckausübung aufrechterhalten werden kann. Dies bedeutet aber, daß für jedes Druckelement zwei separate Leitungen vorhanden sein mußten. Da aber bei der bekannten Ausführungsform mit einer Hohlwalze aus Stahl die Stützelemente nur gruppenweise angesteuert wurden, ließt sich diese Zahl von Leitungen noch realisieren.

Bei der Erfindung jedoch geht es tatsächlich um die Einzelansteuerung, und diese läßt sich in der in Anspruch 1 wiedergegebenen Weise relativ leicht durchführen. Im Gegensatz zu dem bekannten Stand der Technik ist die den einzelnen Stützelementen zugeführte Lagertaschenflüssigkeit druckgesteuert. Die Beheizung, die der Grund für die Mengenregelung war, spielt in den erfindungsgemäßen Anwendungsfällen keine so große Rolle. Alle Lagertaschen sind an eine einzige Zuleitung angeschlossen. Die Kraftausübung des einzelnen Stützelements wird durch den hydrostatischen Druck in den bis auf die Zuleitung geschlossenen Zylinderkammem der einzelnen Stützelemente bestimmt. Zur Veränderung dieses Drucks sind nur sehr geringe Volumina erforderlich, die durch Zuleitungen von sehr geringem Querschnitt herangebracht werden können. Insgesamt ist also nur eine Zuleitung für größere Mengen, nämlich für die Lagertaschenflüssigkeit, und eine Vielzahl von Zuleitungen geringen Querschnitts für die Zylinderkammem erforderlich, was sich noch ohne wesentliche Schwächung des Querschnitts des Querhaupts unterbringen läßt.

Die Gesamtheit der Merkmale des Anspruchs 1 ergibt eine betriebssichere Walze von wesentlich erhöhter Variabilität in der Gestaltung des Linienkraftprofils.

Bei dem bevorzugten Ausführungsbeispiel der Erfindung ist der E-Modul gemäß Anspruch 2 in Längsrichtung und Umfangsrichtung der Hohlwalze unterschiedlich, was in der in Anspruch 3 wiedergegebenen Weise verwirklicht werden kann.

Eine Walze mit einer Hohlwalze aus gummielastischem Material mit Verstärkungseinlagen geht aus der DE-C 25 22 657 hervor. Hierbei sind aber die Einlagen nicht wie in der vorliegenden Patentanmeldung dreilagig angeordnet, was hier den Zweck hat, jeglichen versteifenden Sandwich-Effekt im Hinblick auf eine Biegung in einer durch die Achse gehenden Ebene zu vermeiden.

Der Einfluß der Wickelrichtung auf den E-Modul bei Walzenrohren aus Kunstharz mit gewickelten Faserverstärkungen geht für sich genommen aus der Firmenschrift "Walzen in Leichtbauweise... ein Produkt von Freudenberg" der Firma Carl Freudenberg in DE 6940 Weinheim hervor.

Eine die gewünschte Anpassungsfähigkeit der Hohlwalze ergebende Bemessung ist Gegenstand des Anspruchs 4.

Faserverstärkte Kunststoffe bieten an ihrer Außenfläche häufig nicht immer optimale Gleitverhältnisse. Aus diesem Grund empfiehlt es sich, gemäß Anspruch 5 auf dem Innenumfang der Hohlwalze eine gleitgünstige Schicht vorzusehen, die gleichzeitig verhindert, daß die Hydraulikflüssigkeit unmittelbar gegen das Harzmaterial der Hohlwalze ansteht und damit unter Umständen auf die Dauer chemische Reaktionen eingeht.

Auf der Außenseite der Hohlwalze kann gemäß Anspruch 6 in an sich bekannter Weise ein Überzug aus einem elastomeren Material vorgesehen sein.

Es empfiehlt sich gemäß Anspruch 7, daß die einzeln angesteuerten Stützelemente ihre Drücke automatisch anhand eines in Querrichtung der Bahn ermittelten Eigenschaftsprofils erhalten, zum Beispiel eines Feuchteprofils, eines Dichteprofils, eines Dickenprofils oder dergleichen, wie es für sich genommen aus der DE-A 25 55 677 hervorgeht.

Die größere Nachgiebigkeit der Hohlwalze in einer durch ihre Achse gehenden Ebene kann dazu führen, daß die Stützelemente trotz ihrer in Längsrichtung begrenzten Ausdehnung an den in Längsrichtung gelegenen in Umfangsrichtung verlaufenden Rändern bei entsprechender Durchbiegung der Hohlwalze und/oder des Querhaupts in Gefahr kommen, den tragenden Flüssigkeitsfilm zu durchbrechen und direkt den Innenumfang der Hohlwalze zu berühren.

Um dies zu vermeiden, ist die zumindest teilweise Ausbildung des Stützelements aus einem entsprechend nachgiebigen Werkstoff, also zum Beispiel einem elastomeren Kunststoff, gemäß Anspruch 8 zweckmäßig, die im einzelnen in der in Anspruch 9 wiedergegebenen Weise konstruktiv vorteilhaft verwirklicht werden kann.

In der Zeichnung ist ein Ausführungsbeispiel der Erfindung schematisch dargestellt.
Fig. 1 zeigt einen durch die Achse gehenden Längsschnitt einer erfindungsgemäßen Walze;
Fig. 2 zeigt einen entsprechenden Teilschnitt durch den dem Walzspalt benachbarten Bereich in vergrößertem Maßstab;
Fig. 3 zeigt eine radiale Teilansicht, die in verschiedenen radialen Abständen aufgeschnitten ist, um die Orientierung der gewickelten Faserlagen erkennen zu lassen;
Fig. 4 zeigt eine Ansicht einer Walzvorrichtung mit einer erfindungsgemäßen Walze;
Fig. 5 zeigt einen Teilquerschnitt in einer auf der Achse der Hohlwalze senkrecht stehenden Ebene durch ein angepaßtes Stützelement.

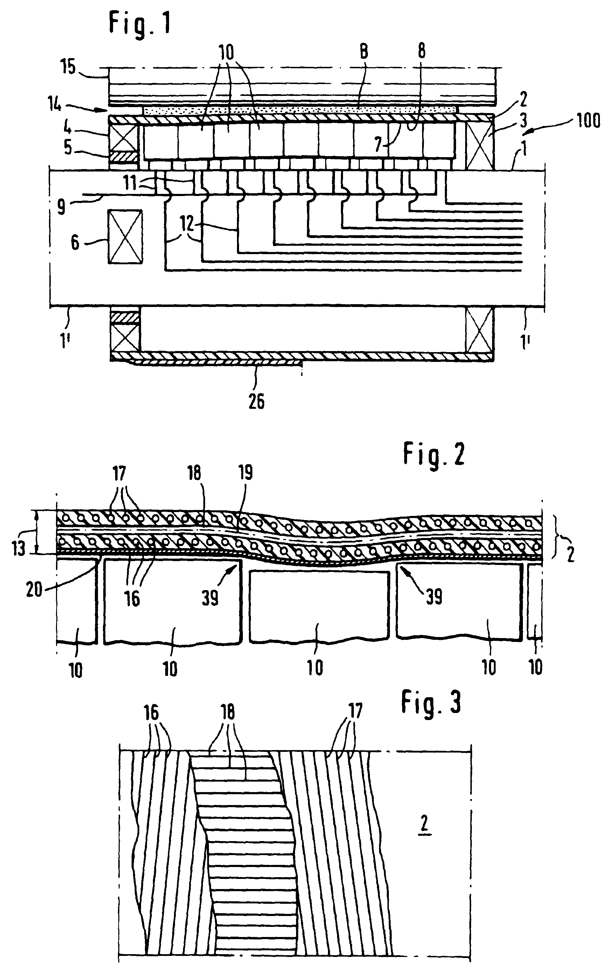

Die in Fig. 1 als Ganzes mit 100 bezeichnete Walze umfaßt ein undrehbares Querhaupt 1, welches eine umlaufende Hohlwalze 2 der Länge nach mit allseitigem Abstand durchgreift. Die aus der Hohlwalze 2 hervorstehenden Enden 1' des Querhaupts 1 sind in einer nicht wiedergegebenen Weise in einem Walzenständer oder den Schwingen eines Kalanders oder in ähnlicher Weise gelagert.

Bei der in Fig. 1 am rechten Ende der Hohlwalze 2 wiedergegebenen Ausführungsform ist die Hohlwalze 2 über ein Wälzlager 3 auf dem Querhaupt 1 gelagert. Am linken Ende der Hohlwalze 2 ist eine Ausführungsvariante dargestellt, bei der die Hohlwalze 2 über ein Lager 4 auf einem Ring 5 gelagert ist, der sich gegenüber dem Querhaupt 1 von oben nach unten etwas verlagern, jedoch nicht drehen kann. Es ist an dem Querhaupt 1 eine Geradführung in Gestalt zweiter einander gegenüberliegender Abflachungen 6 des Querhaupts 1 vorgesehen, an denen der Führungsring 5 mit entsprechenden nicht wiedergegebenen Führungsflächen parallel zur Zeichenebene gleiten kann. Das Lager 3 vermag Kräfte in Wirkrichtung der Walze 100 von der Hohlwalze 2 auf das Querhaupt 1 zu übertragen, das Lager hat nur Führungsaufgaben senkrecht zur Wirkebene, als die die Verbindungsebene der Achse der Hohlwalze 2 und der Gegenwalze 15 anzusehen ist. In der Wirkebene können wegen der Verlagerbarkeit des Führungsrings 5 keine Kräfte von der Hohlwalze 2 auf das Querhaupt 1 weitergegeben werden. Es versteht sich, daß bei einer praktischen Walze die Ausbildung an den beiden Enden der Hohlwalze 2 gleich ist. Die Darstellung in Fig. 1 dient nur der Erläuterung der Walzentypen, für die die Erfindung in Betracht kommt.

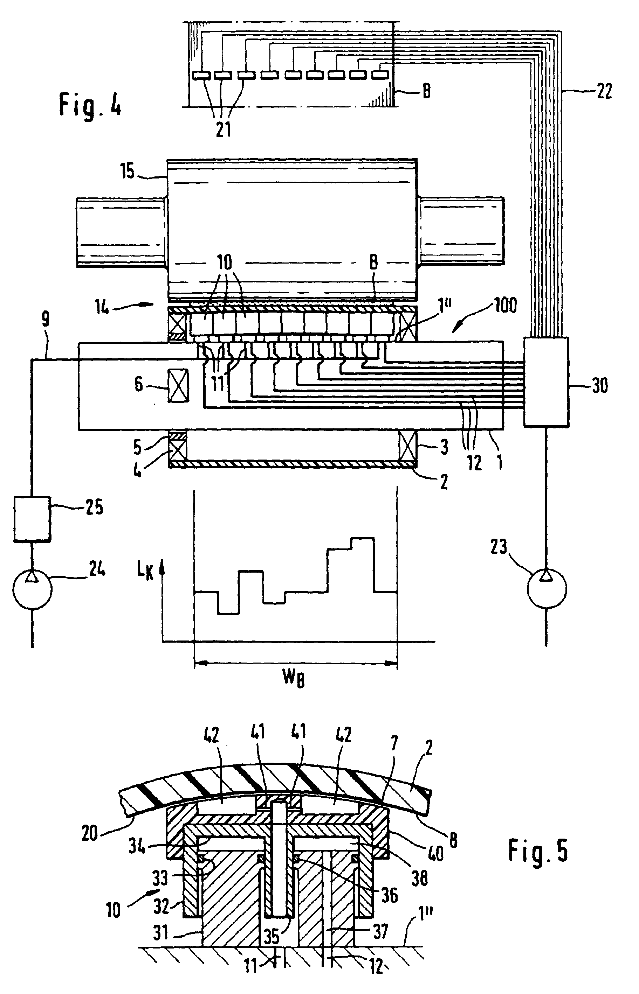

In dem Ausführungsbeispiel der Fig. 1 sind über die Länge der Hohlwalze 2 neun Stützelemente 10 in gleichmäßigen Abständen verteilt angeordnet, die am Querhaupt 1 abgestützt sind und mit ihrer Stützfläche 7 gegen den Innenumfang 8 der Hohlwalze 2 anliegen. Die Stützelemente 10 werden über eine gemeinsame Zuleitung 9 und zu den einzelnen Stützelementen 10 führenden Zweigleitungen 11 und zusätzlich über jedem einzelnen Stützelement 10 zugeordnete separate Zuleitungen mit zwei getrennten Druckflüssigkeiten versorgt, die einerseits die Stützelemente 10 gegen den Innenumfang 8 der Hohlwalze anpressen und andererseits die Lagerung der Stützelemente 10 an diesem Innenumfang 8 übernehmen, wie im Zusammenhang mit der Fig. 5 noch im einzelnen erläutert wird.

In dem in Fig. 1 wiedergegebenen Ausführungsbeispiel ist der Walzspalt 14 oben gelegen, d.h. eine Gegenwalze 15 liegt von oben über die Bahn B gegen den arbeitenden Außenumfang der Walze 2 an. Dadurch ergibt sich für die Hohlwalze 2 eine Streckenlast, die von den Stützelementen 10 abgefangen und auf das Querhaupt 1 weitergeleitet wird, welches sich unter dieser Streckenlast gemäß Fig. 1 nach unten durchbiegt, was wegen des ringsum allseitig belassenen Abstandes (der in Fig. 1 wesentlich übertrieben dargestellt ist) möglich ist, wodurch die Hohlwalze 2 von belastungsbedingten Formänderungen freigehalten werden kann.

Wie in Fig. 2 angedeutet ist, besteht die Hohlwalze 2 aus einem faserverstärkten Kunstharz, wobei die radiale Wandstärke 13 20 mm nicht übersteigt. In den radial inneren und äußeren Bereichen finden sich Lagen, in denen die endlosen Fasern 16 bzw. 17 im wesentlichen in Umfangsrichtung mit einer Abweichung von +/-15° gewickelt sind, wie es sich aus Fig. 3 entnehmen läßt, wo die Abweichung von der Umfangsrichtung etwa 6° beträgt und in der inneren und äußeren Lage verschieden gerichtet ist, so daß sich die Fasern 16,17 kreuzen. In der mittleren Lage im Bereich der bei einer Biegung der Hohlwalze 2 in einer durch ihre Achse gehenden Ebene vorhandenen neutralen Faser oder Zone 19 verlaufen die Fasem 18 in Längsrichtung. Auch hier ist eine Abweichung von der Längsrichtung von +/-15° möglich. Der Sinn dieser Anordnung ist, daß bei einer Biegung der Hohlwalze 2 in einer durch die Längsachse gehenden Ebene kein Sandwich-Effekt entsteht, d.h. die gegen Längs-Zug- und -Druckbeanspruchung besonders widerstandsfähige Faserorientierung aus den radialen Außenlagen ferngehalten sind. Dadurch ist der E-Modul des entsprechend den Fig. 2 und 3 aufgebauten Verbundstoffes der Hohlwalze 2 in den radialen Außenbereichen in Längsrichtung geringer als in Umfangsrichtung. Dies soll auch für die Wandung der Hohlwalze 2 insgesamt gelten, d.h. es sollen weniger Stränge -der Verstärkungsfasern in Längsrichtung als in Umfangsrichtung verlaufen. Durch diese Faseranordnung läßt sich eine Linienkraftbeeinflussung durch Beulen der Hohlwalze 2 besonders gut erreichen. Es braucht dabei nicht das gesamte die Hohlwalze 2 bildende Rohr verbogen zu werden. Der E-Modul in Längsrichtung soll dabei 100 000 N/mm² nicht übersteigen.

Dadurch wird die Hohlwalze 2 besonders nachgiebig und kann einem durch die unterschiedliche Betätigung der Stützelemente 10 von innen aufgeprägten Kraftprofil ziemlich getreu folgen, wie es durch das niedrigerstehende mittlere Stützelement 10 in Fig. 2 und den entsprechenden Verlauf der Hohlwalze 2 übertrieben angedeutet ist.

Ein faserverstärktes Kunststoffmaterial ist manchmal für das direkte Zusammenwirken mit Gleitelementen wie den Stützelementen 10 nicht gut geeignet. Aus diesem Grund ist der Innenumfang 8 der Hohlwalze 2 mit einer Schicht 20 aus einem im Zusammenwirken mit den Stützelementen 10 gleitgünstigen und für die hydraulische Flüssigkeit im Innern der Hohlwalze 2 nicht durchlässigen Material versehen.

Auf dem Außenumfang der Hohlwalze 2 kann ein Belag 26 aus elastomerem Matgerial vorgesehen sein, wie in Fig. 1 angedeutet ist.

In Fig. 4 ist ein Einsatzbeispiel der Walze 100 angedeutet. Es ist das Walzenpaar 100,15 wiedergegeben, in dessen Walzspalt 14 die Bahn B druckbehandelt wird. Oberhalb der Gegenwalze 15 ist ein anderer, in Laufrichtung der Bahn B dem Walzspalt 4 nachfolgender Teil der Bahn B wiedergegeben, an dem mittels Meßeinrichtungen 21, von denen in dem Ausführungsbeispiel eine der Zahl der Stützelemente 10 gleiche Zahl an deren Stellen vorhanden sind, ein Eigenschaftsprofil wie Feuchteverteilung, Dichteverteilung, Dickenverteilung quer zur Bahn gemessen wird. Die Meßwerte der einzelnen Meßeinrichtungen 21 werden über Leitungen 22 einer Steuereinrichtung 30 zugeführt. Statt der neun Meßeinrichtungen 21 könnte auch eine einzige, traversierend angeordnete Meßeinrichtung verwendet werden.

Die Steuereinrichtung 30 wird von einer Pumpe 23 mit Druckflüssigkeit versorgt und teilt den einzelnen Stützelementen 10 über die Leitungen 12 separat einen Druck zu, der durch einen in der Steuereinrichtung 30 gespeicherten Algorithmus aus den Meßwerten der Meßeinrichtungen 21 gebildet wird. Eine zweite Pumpe 24 sendet Druckflüssigkeit über einen Druckregler 25 in die Leitung 9, die alle Stützelemente 10 über die Zweigleitungen 11 mit einem zweiten, für alle Stützelemente gleichen geregelten Druck versorgt.

Unterhalb der Walze 100 ist eine beispielsweise Linienkraftverteilung L_{K} über die Warenbahnbreite W_{B} angedeutet, wie sie sich aus den durch die Meßeinrichtungen 21 gemessenen Werten nach der Berechnung der Steuereinrichtung 30 ergibt. L_{K} sind also die Kräfte, die die einzelnen Stützelemente ausüben. Die Hohlwalze 2 ist zwar immer noch ein formsteifes Rohr, im Vergleich mit einem Stahlrohr der bei durchbiegungssteuerbaren Walzen üblichen Wandstärke aber bei Biegebeanspruchungen in einer durch die Achse gehenden Ebene recht flexibel, so daß das im unteren Teil der Fig. 4 angedeutete Linienkraftprofil aufgrund des in Fig. 2 angedeuteten Mechanismus "durchschlägt", d.h. an der Bahn B weitgehend getreu verwirklicht werden kann.

In Fig. 5 ist ein einzelnes Stützelement 10 wiedergegeben, welches mit seiner Stützfläche 7 gegen den Innenumfang 8 der Hohlwalze 2 anliegt. Das Stützelement 10 umfaßt eine Kolben/Zylindereinheit mit einem Ringkolben 31, der auf der dem Walzspalt 14 zugewandten abgeflachten Oberseite 1" des Querhaupts 1 angebracht ist. Über den Ringkolben 31 ist der topfförmige "Zylinder" 32 gestülpt, der gegenüber dem Ringkolben 31 heb- und senkbar ist und an seinem Innenumfang gegenüber dem Ringkolben 31 mittels Dichtungen 33 abgedichtet ist. Der Boden 34 des "Zylinders" 32 hat einen rohrförmigen, zur offenen Seite weisenden mittigen Ansatz 35, der in die Ringöffnung des Ringkolbens 31 eingreift und dort mittels Dichtungen 36 abgedichtet ist. Der Ringkolben 31 besitzt eine achsparallele Bohrung 37, die in die zu.dem betreffenden Stützelement 10 führende Zuleitung 12 mündet. In das Innere des Ringkolbens 31 führt die Zweigleitung 11.

Die dem Innenumfang 8 der Hohlwalze 2 zugewandte Außenseite des Bodens 34 ist von einem kappenförmigen Kunststoffteil 40 überdeckt, welches aus einem gestaltfesten aber noch etwas nachgiebigen, mit der Beschichtung 20 eine Gleitpaarung bildenden Material besteht. Auf der dem Innenumfang 8 der Hohlwalze 2 zugewandten Seite ist die Kappe 40 teilzylindrisch ausgebildet, so daß sie sich dem Innenumfang 8 genau anschmiegt. Die Kappe 40 bildet dort die Stützfläche 7, in der eine oder mehrere ringsum berandete flache Lagertaschen 42 ausgenommen sind, die vom Innern des rohrförmigen Ansatzes 35 her über Drosselbohrungen 41 mit Druckflüssigkeit versehen werden können. Die aus der Zweigleitung 11 in das Innere des rohrförmigen Ansatzes 35 eintretende Druckflüssigkeit gelangt also über die Drosselbohrungen 41 in die Lagertaschen 42 und übt dort einen hydrostatischen Druck gegen den Innenumfang 8 der Hohlwalze 2 aus. Die Druckflüssigkeit strömt ständig über die Ränder der Lagertaschen 42 ab und bildet auf diesen Rändern in der Stützfläche 7 einen tragfähigen Flüssigkeitsfilm, über den die Kraft des Stützelements 10 auf den Innenumfang 8 der Hohlwalze 2 übertragen wird.

Der Druck in den Zweigleitungen 11 wird über den Druckregler 25 geregelt, und zwar auf einen für alle Stützelemente 10 gleichen Wert. Die Versorgung der Lagertaschen 42 aller Stützelemente 10 erfolgt über die einzige Leitung 9, die für alle Stützelemente gemeinsam ist.

Die Kraft des Stützelements 10 wird durch den Druck der zwischen dem Boden 34 des "Zylinders" 32 und der Oberseite des "Kolbens" 31 gebildeten Zylinderkammer 38 bestimmt. Die hierfür erforderliche Druckflüssigkeit wird jedem Stützelement 10 separat über seine eigene Zuleitung 12 zugeführt. Da sich der "Zylinder" 32 im normalen Betrieb nur wenig radial verlagert, sind die für die Druckbeaufschlagung der Zylinderkammer 38 erforderlichen Flüssigkeitsmengen ebenfalls sehr gering. Die Zuleitungen 12 können also einen sehr geringen Durchmesser aufweisen, so daß der dafür notwendige Querschnittsanteil im Innern der Hohlwalze 2, sei es im Innern des Querhauptes 1 oder an der Außenseite desselben, auch bei größeren Anzahlen von Stützelementen 10 ohne bedeutende Schwächung des Querhauptes 1 noch zur Verfügung gestellt werden kann.

Die Ausbildung der Kappe 40 aus Kunststoff soll eine gewisse Nachgiebigkeit der Stützfläche 7 ergeben, um es bei starken Druckunterschieden bei in Achsrichtung aufeinanderfolgenden Stützelementen, wie sie nach dem Diagramm im unteren Teil der Fig. 4 vorkommen können, an den in Fig. 2 mit 39 bezeichneten Stellen nicht zu übermäßig erhöhten Flächenpressungen kommen zu lassen.

Die Stützelemente 10 haben in der Draufsicht gemäß Fig. 5 von oben einen rechteckigen Querschnitt und folgen in Längsrichtung der Hohlwalze 2 unmittelbar bzw. mit nur geringen Abständen aufeinander. Die Abstände müssen so bemessen sein, daß benachbarte Stützelemente 10 bei Durchbiegungen des Querhaupts 1 oder der Hohlwalze 2 nicht aneinander zur Anlage kommen und sich gegenseitig in ihrer Hubbewegung behindern. Die axiale Erstreckung des einzelnen Stützelements 10 soll 20 cm nicht übersteigen, um eine möglichst feingestufte Abstützung der Hohlwalze 2 zu erzielen.

Das Zusammenwirken einer Biegebeanspruchung in einer durch die Achse gehenden Ebene dank des aus Fig. 2 und 3 ersichtlichen Aufbaus relativ leicht folgenden Hohlwalze 2 mit in Achsrichtung dicht aufeinanderfolgenden, relativ schmalen Stützelementen 10 mit Einzelansteuerung ergibt eine besonders fein steuerbare Walze.

## Patentansprüche

1. Walze (100) für die Druckbehandlung einer Bahn (B) aus Papier, Textil, Kunststoffolie, Blech oder dergleichen,
mit einer umlaufenden, den arbeitenden Walzenumfang bildenden Hohlwalze (2) aus einem faserverstärkten Kunststoffmaterial,
mit einem die Hohlwalze (2) der Länge nach durchgreifenden, ringsum radialen Abstand zum Innenumfang (B) der Hohlwalze (2) belassenden, an den Enden (1',1') undrehbar an äußeren Abstützungen abgestützten Querhaupt
und mit in einer oder mehreren Längsreihen an dem Querhaupt (1) auf der Seite der Druckausübung angeordneten, mittels einer Druckflüssigkeit gegen den Innenumfang (8) der Hohlwalze (1) anpreßbaren hydrostatischen Stützelementen (10), welche in ihrer Anlagefläche (7) gegen den Innenumfang (8) der Hohlwalze (2) offene, ringsum berandete Lagertaschen (42) aufweisen, die zur Abstützung der Hohlwalze (2) mit Druckflüssigkeit füllbar sind, wobei die Druckflüssigkeit ständig über den Rand der Lagertaschen (42) abströmt und dort einen tragfähigen Flüssigkeitsfilm bildet,
**dadurch gekennzeichnet,**
**daß** die Hohlwalze (2) aus faserverstärktem Kunstharzmaterial besteht
**daß** die Stützelemente (10) in Längsrichtung der Hohlwalze (2) keine größere Länge als 20 cm aufweisen, in Längsrichtung des Querhaupts (1) dicht aneinander anschließen und sämtlich unabhängig voneinander ansteuerbar sind,
**daß** jedes Stützelement (10) eine hydraulische Kolben/Zylindereinheit (31,32) mit radialer Achse umfaßt, die die Anpressung der Anlagefläche (7) an den Innenumfang (8) der Hohlwalze (2) unter dem Druck einer bis auf die Zuleitung (12,37) geschlossenen Zylinderkammer (38) bewirkt,
**daß** die Zylinderkammern (38) der einzelnen Stützelemente (10) an separate Zuleitungen (12) mit unabhängig voneinander wählbaren Drücken angeschlossen sind
und **daß** die hydrostatischen Lagertaschen (42) der einzelnen Stützelemente (10) an eine gemeinsame Zuleitung (9) mit einem für alle Stützelemente (10) gleichen Druck angeschlossen sind.

2. Walze nach Anspruch 1, **dadurch gekennzeichnet, daß** der E-Modul des Materials der Hohlwalze (2) in Längsrichtung kleiner als in Umfangsrichtung ist.

3. Walze nach Anspruch 2, **dadurch gekennzeichnet, daß** die Faserverstärkung aus gewickelten Endlosfasern 16,17,18 oder Endlosfaseraggregaten besteht und dreilagig ausgeführt ist, wobei die Fasern (16,17) der radial äußeren Lagen einen Wickelwinkel von +/-15° zur Umfangsrichtung und die Fasern (18) der mittleren Lage einen Wickelwinkel von +/-15° zur Längsrichtung aufweisen.

4. Walze nach einem der Ansprüche 1 bis 3, **dadurch gekennzeichnet, daß** die Hohlwalze (2) eine radiale Wandstärke (13) von weniger als 20 mm besitzt und der E-Modul des Materials der Hohlwalze (2) in Längsrichtung derselben weniger als 100 000 N/mm² beträgt.

5. Walze nach einem der Ansprüche 1 bis 4, **dadurch gekennzeichnet, daß** die Hohlwalze (2) auf dem Innenumfang (8) eine gleitgünstige und gegen die Hydraulikflüssigkeit dichte Schicht (20) aufweist.

6. Walze nach einem der Ansprüche 1 bis 5, **dadurch gekennzeichnet, daß** die Hohlwalze (2) auf dem Außenumfang einen Überzug (26) aus einem elastomeren Material trägt.

7. Walze nach einem der Ansprüche 1 bis 6, **dadurch gekennzeichnet, daß** eine Meßeinrichtung (21,21,...) für ein quer zur Bahn (B) vorhandenes Eigenschaftsprofil der Bahn (B) vorgesehen ist, die mit einer Steuereinrichtung (30) verbunden ist, die die Zylinderkammern (38) mit Druckflüssigkeit aus den Meßwerten errechneter Drücke beaufschlagt.

8. Walze nach einem der Ansprüche 1 bis 7, **dadurch gekennzeichnet, daß** mindestens ein Stützelement (10) mindestens im Bereich der Anlage an dem Innenumfang (8) der Hohlwalze (2) aus einem elastisch nachgiebigen Werkstoffe mit einem E-Modul von weniger als 100 000 N/mm² besteht.

9. Walze nach Anspruch 8, **dadurch gekennzeichnet, daß** das Stützelement (10) eine Kappe (40) aus dem elastisch nachgiebigen Werkstoff aufweist, in der die hydrostatischen Lagertaschen (42) ausgebildet sind.

## Claims

1. A roller (100) for the pressure treatment of a web (B) of paper, textile, plastic sheeting, sheet metal or the like,
comprising a rotating shell (2) which forms the working roller periphery and which consists of a fibre-reinforced plastic material,
comprising a beam which extends through the length of the shell (2) and which leaves all round a radial distance from the inner periphery (8) of the shell (2), and which is supported at the ends (1', 1') non-rotatably on outer supports,
and comprising hydrostatic support elements (10) which are disposed in one or more longitudinal rows on the beam (1) on the side where the pressure is exerted, and which are adapted to be pressed by a pressure fluid against the inner periphery (8) of the shell (1), and which have, in their abutment surface (7), peripherally bordered bearing pockets (42) which are open towards the inner periphery (8) of the shell (2) and which, for the purpose of supporting the shell (2), are fillable with pressure fluid, the pressure fluid constantly flowing away over the edge of the bearing pockets (42), where it forms a load-bearing fluid film,
**characterised in that**
the shell (2) consists of fibre-reinforced synthetic resin material
**in that** the length of the support elements (10) in the longitudinal direction of the shell (2) is not greater than 20 cm, the support elements being closely contiguous in the longitudinal direction of the beam (1) and all being controllable independently of one another,
each support element (10) comprises a hydraulic piston and cylinder unit (31, 32) with the axis disposed radially, such unit causing the abutment surface (7) to be pressed against the inner periphery (8) of the shell (2) under the pressure of a cylinder chamber (38) closed except for the supply line (12, 37),
**in that** the cylinder chambers (38) of the individual support elements (10) are connected to separate supply lines (12) having pressures which can be selected independently of one another
and **in that** the hydrostatic bearing pockets (42) of the individual support elements (10) are connected to a common supply line (9) having the same pressure for all the support elements (10).

2. A roller according to claim 1, **characterised in that** the modulus of elasticity of the material of the shell (2) is less in the longitudinal direction than in the peripheral direction.

3. A roller according to claim 2, **characterised in that** the fibre-reinforcement consists of coiled continuous fibres (16, 17, 18) or continuous fibre aggregates and is made in three layers, the fibres (16, 17) of the radially outer layers having a coil angle of +/- 15° to the peripheral direction and the fibres (18) of the middle layer having a coil angle of +/- 15° to the longitudinal direction.

4. A roller according to any one of claims 1 to 3, **characterised in that** the shell (2) has a radial wall thickness (13) of less than 20 mm and the modulus of elasticity of the material of the shell (2) in the longitudinal direction thereof is less than 100 000 N/mm².

5. A roller according to any one of claims 1 to 4, **characterised in that** the shell (2) has on the inner periphery (8) a layer (20) which assists sliding and which is sealed with respect to the hydraulic fluid.

6. A roller according to any one of claims 1 to 5, **characterised in that** the shell (2) has on the outer periphery a covering (26) of an elastomeric material.

7. A roller according to any one of claims 1 - 6, **characterised in that** a measuring device (21, 21...) is provided for a property profile of the web (B) which the latter has in the transverse direction, said device being connected to a control device (30) which feeds pressure fluid to the cylinder chambers (38) at pressures calculated from the measured. values.

8. A roller according to any one of claims 1 to 7, **characterised in that** at least one support element (10) at least in the region of abutment against the inner periphery (8) of the shell (2) consists of an elastically resilient material having a modulus of elasticity of less than 100 000 N/mm².

9. A roller according to claim 8, **characterised in that** the support element (10) has a cap (40) of the elastically resilient material, in which cap the hydrostatic bearing pockets (42) are formed.

## Revendications

1. Rouleau (100) pour traiter par pression une bande de papier ou de textile, une feuille de plastique, une tôle ou objet similaire,
comprenant :
- un cylindre creux (2) tournant dont la périphérie constitue la surface de travail et qui est fait d'une matière plastique renforcée par des fibres de verre,
- une entretoise, disposée longitudinalement par rapport au cylindre creux (2) en laissant un intervalle radial entre elle et la surface interne (8) du cylindre creux (2), cette entretoise étant fixée sans pouvoir tourneur sur des appuis extérieurs,
- des éléments de soutien (10) disposés en une ou plusieurs files longitudinales sur l'entretoise, du côté où s'exerce la pression, ces éléments pouvant être appliqués sous pression hydrostatique sur la face interne (8) du cylindre creux (2) par des portées d'appui (7) comportant des poches de palier (42) ouvertes et délimitées périphériquement, ces poches pouvant être remplies, pour soutenir le cylindre creux (2), d'un liquide sous pression qui s'écoule en permanence le long du bord des poches (42) en formant à cet endroit un film liquide porteur,
**caractérisé en ce que**
le cylindre creux (2) est fait d'une résine synthétique renforcée par des fibres de verre,
les éléments de soutien (10) présentent, selon la direction longitudinale du rouleau une dimension ne dépassant pas 20 cm, ces éléments se raccordant étroitement les uns aux autres selon la direction longitudinale de l'entretoise et pouvant être tous commandés indépendamment les uns des autres,
- chaque élément de soutien (10) comprend un ensemble hydraulique piston/cylindre (31, 32) à axe radial, assurant l'application de la portée d'appui (7) sur la face périphérique interne (8) par l'effet de la pression existant dans une chambre de cylindre (38) fermée, à l'exception de sa conduite d'alimentation (12, 37),
- les chambres de cylindre (38) des différents éléments de soutien (10) sont raccordées chacune à une conduite d'amenée séparée (12), dont la pression peut être choisie indépendamment de celle régnant dans les autres conduites (12),
- les poches de palier hydrostatique (42) de chacun des éléments de soutien (10) sont raccordées à une conduite commune d'amenée (9) présentant une même pression pour les éléments de soutien (10).

2. Rouleau selon la revendication 1,
**caractérisé en ce que**
le module d'élasticité du matériau constituant le cylindre creux (2) est plus petit, en direction longitudinale, qu'en direction périphérique.

3. Rouleau selon la revendication 2,
**caractérisé en ce que**
le renforcement est assuré par des fibres sans fin enroulées (16, 17, 18) ou par des agrégats de fibres, il comprend trois couches, les fibres radialement externes (16, 17) présentant un angle d'enroulement de ± 15° par rapport à la direction longitudinale.

4. Rouleau selon une des revendications 1 à 3,
**caractérisé en ce que**
le cylindre creux (2) a une épaisseur radiale de paroi (13) inférieur à 20 mm, le module d'élasticité du matériau constituant ce rouleau étant, selon la direction longitudinale de celui-ci, inférieur à 100 00 N/mm².

5. Rouleau selon une des revendications 1 à 4,
**caractérisé en ce que**
le cylindre creux (2) présente sur la face périphérique interne (8) une couche favorisant le glissement et étanche vis-à-vis du fluide hydraulique.

6. Rouleau selon une des revendication s 1 à 5,
**caractérisé en ce que**
le rouleau creux (2) porte sur sa face périphérique externe, un revêtement (25) fait d'un matériau élastomérique.

7. Rouleau selon l'une quelconque des revendications 1 à 6,
**caractérisé en ce que**
il comporte un dispositif de mesure (21, 21, ....) pour fournir un profil caractéristique de la bande B dans sa dimension transversale, ce dispositif étant relié à un dispositif de commande qui alimente les chambre de cylindre (38) en fluide à des pressions calculées à partir des valeurs mesurées.

8. Rouleau selon une des revendications 1 à 7,
**caractérisé en ce que**
au moins un élément de soutien (10), au moins dans sa zone d'appui sur la face périphérique interne (8) du cylindre (2), est fait d'un matériau flexible élastiquement dont le module d'élasticité est inférieur à 100 000 N/mm².

9. Rouleau selon la revendication 8,
**caractérisé en ce que**
l'élément de soutien (10) porte un capot (40) fait d'un matériau flexible élastiquement dans lequel sont creusées les poches de palier hydrostatique (42).
